(19) Europäisches Patentamt
European Patent Office
Office européen des brevets

(11) **EP 4 082 298 B1**

(12) **EUROPEAN PATENT SPECIFICATION**

(45) Date of publication and mention
of the grant of the patent:
**13.12.2023 Bulletin 2023/50**

(21) Application number: **20838079.0**

(22) Date of filing: **22.12.2020**

(51) International Patent Classification (IPC):
**H05B 7/144** (2006.01)

(52) Cooperative Patent Classification (CPC):
**H05B 7/144;** Y02P 10/25

(86) International application number:
**PCT/EP2020/087664**

(87) International publication number:
**WO 2021/130244 (01.07.2021 Gazette 2021/26)**

(54) **THREE-PHASE AC-POWERED ELECTRIC ARC FURNACE WITH CONTINUOUS CURRENT REGULATING DEVICE**

DREIPHASEN-WECHSELSTROM-ELEKTROLICHTBOGENOFEN MIT GLEICHSTROMREGELEINRICHTUNG

FOUR ÉLECTRIQUE À ARC ALIMENTÉ PAR COURANT ALTERNATIF TRIPHASÉ AVEC DISPOSITIF DE RÉGULATION DE COURANT CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2019 ES 201931149**

(43) Date of publication of application:
**02.11.2022 Bulletin 2022/44**

(73) Proprietor: **Fundación Cener**
**31621 Sarriguren, Navarra (ES)**

(72) Inventor: **VISIERS GUIXOT, Manuel**
**31621 Sarriguren, Navarra (ES)**

(74) Representative: **ABG Intellectual Property Law, S.L.**
**Avenida de Burgos, 16D**
**Edificio Euromor**
**28036 Madrid (ES)**

(56) References cited:
EP-A1- 3 124 903          CN-A- 1 845 430
CN-A- 104 037 767         CN-U- 209 119 804

## Description

Object of the Invention

The present invention relates to an installation and a method for regulating the electric current in a normally three-phase AC-powered electric arc furnace; particularly the invention relates to a regulator device which regulates the current circulating through the electrodes of the electric arc furnace and allows preventing the circulation of short-circuit currents that may damage the electrodes, as well as the intervention of any element causing the current to be cut off by a protective device which would stop the operation of the furnace in the event of short circuits.

Background of the Invention

Wear on electrodes in a metallurgical electric arc furnace caused by short circuits that occur in the shaft is a well known technical problem in steel plants using electric arc furnaces.

These electric arc furnaces comprise three electrodes, one for each phase of the electric system. To melt aluminum scrap, the heat generated by the striking electric arc between the electrodes and the aluminum scrap in contact with the mass of the furnace is used. Normally, a power transformer with the possibility of modifying the number of active coils, and therefore the possibility of modifying the applied voltage in a stepwise manner, is used to power the furnace. However, this number of positions is very limited, so the voltage variations that can be obtained are reduced and the on-load use thereof is not possible, consequently it is considered that the voltage applied to the furnace is constant during a given process.

This makes it necessary to modify the impedance in order to be able to control the melting current. The impedance can be changed by modifying the position of the electrodes which is achieved by moving the electrodes to or away from the aluminum scrap; by moving the electrodes closer to the material, the arc finds a path with lower impedance and the material melts by means of Joule effect. The impedance gradually changes as the aluminum scrap melts, so since the voltage is constant, the current changes and the electrodes must be moved by means of mechanical elements to keep the current approximately constant within a range of given values, preventing the initiation of the protective devices and cutting off the current to prevent a short circuit when the impedance is practically null.

The electrodes are moved with mechanical drives that are very slow in comparison with current variations, making it very difficult to efficiently control the circulating current. This leads to the wear on the electrodes and causes the impact of the electrodes against the aluminum scrap, which in turn generates breakage therein. Broken electrodes must be replaced to keep the furnace in operation.

Although broken electrodes have not involved a significant economic impact to date, the situation has changed with the increase in the prices of graphite, i.e., the material from which electrodes are generally made, so electrode protection has become a priority in the metallurgical industry which is already seeking technical solutions to solve the problem.

EP 3 124 903 A1 describes an electric power apparatus for an electric arc furnace that comprises at least one electrode and is connectable to a power network to supply to the electrode the electric energy to generate an electric arc to melt a metal mass. The apparatus comprises an electric regulation unit interposed and connected to the power network and to the electrode and configured to regulate at least one electric quantity for powering the electrode. The apparatus also comprises at least one detection device to detect the electric quantity, interposed between the electrode and the electric regulation unit, a positioning device to move the at least one electrode nearer to/away from the metal mass to be melted and a control and command unit(16).

Description of the Invention

The present invention proposes a solution to the preceding problems by means of a three-phase AC-powered electric arc furnace comprising a continuous current regulating device according to claim 1 and a method for regulating the current according to claim 10. Preferred embodiments of the invention are defined in the dependent claims.

A first inventive aspect provides a *three-phase AC-powered electric arc furnace comprising a continuous current regulating device, wherein for each phase*

> *the electric arc furnace comprises at least one furnace electrode to which a voltage $V_h$ is applied and through which a current circulates $I_h$, and*
> *the electric arc furnace is connected to a voltage source generating a voltage $V_t$,*

*characterized in that the device is connected in series between the voltage source and a furnace electrode, and comprises:*

- *switching means connected in series between the voltage source and the at least one furnace electrode, and wherein the switching means are configured for activating or deactivating the phase of the regulating device to which it is connected;*
- *a converter connected in parallel to the switching means, such that the current circulates through the converter when the switching means are open, and wherein the converter comprises,*

> *at least one inverter, with its AC terminals connected in series between the voltage source and*

*the at least one furnace electrode, wherein the at least one inverter is configured for converting DC voltage into AC voltage,*

*capacitive means connected to the DC terminals of the at least one inverter, between which a voltage $V_c$ is maintained, and*

*an energy dissipator connected in parallel to the capacitive means, wherein the energy dissipator comprises an electronic regulator and resistive means connected in series with the electronic regulator;*

- *voltage measuring means for measuring the voltage $V_h$, voltage measuring means for measuring the voltage $V_t$, voltage measuring means for measuring the voltage $V_c$ and current measuring means for measuring the current $I_h$, wherein the measuring means are configured for emitting measurement signals $S_{Vh}$, $S_{Vt}$, $S_{Vc}$, $S_i$ corresponding to the measured voltage and current values;*
- *at least several control means configured for receiving and processing the measurement signals $S_{Vh}$, $S_{Vt}$, $S_{Vc}$, $S_i$ of the measuring means, and for emitting control signals to the converter and to the switching means in response to a time variation of the current $I_h$ which exceeds a current threshold $I_{hmax}$ as a result of the start of a short circuit induced by the electric arc, wherein the control means emit,*

  *a control signal S1 to the switching means to activate the device,*

  *a control signal S2 to activate the inverter, and*

  *a control signal S3 to activate the energy dissipator,*

  *such that the electronic regulator of the energy dissipator regulates the passage of current to the resistive means by controlling the dissipated energy and keeping the DC voltage Vc between the DC terminals of the inverter under control, converting the voltage Vc into a phase- and amplitude-regulated compensation AC voltage $V_x$, which is in turn subtracted from the voltage $V_t$ of the voltage source, such that the voltage $V_h$ applied to the furnace electrodes is reduced, and accordingly the current $I_h$ does not exceed the threshold $I_{hmax}$.*

Throughout the present document, it must be understood that the voltage source, the furnace, and the continuous current regulating device are single-phase elements configured for use in single-phase or three-phase systems.

Likewise, throughout the present document, reference will be made interchangeably to dissipated energy or power, with dissipated power being the amount of energy dissipated per unit of time.

Voltage source shall be understood as any means capable of supplying a sinusoidal voltage suitable for powering an electric arc furnace; in a particular embodiment, three voltage sources are grouped to form a three-phase voltage source.

In the present document, the terms electrode, furnace electrode, and electrode of the furnace must be understood as equivalent; it must also be understood that a three-phase furnace comprises at least three electrodes.

It must be understood that the term DC bus refers to the set of elements connected to the DC terminals of the inverter.

The AC voltage generated by the DC regulating device will also be referred to as compensation voltage or $V_x$, whereas the voltage between the DC terminals of the inverter will also be referred to as DC bus voltage or $V_C$.

To regulate the current circulating through the electric furnace electrodes, the device generates a phase- and amplitude-controlled sinusoidal voltage in series between the furnace feed voltage source and the electric arc furnace itself. This sinusoidal voltage, or compensation voltage, is subtracted from the voltage supplied by the voltage source, such that for a given impedance of the furnace, the circulating current is modified by means of changing the compensation voltage continuously.

The compensation voltage generated by the device is produced between the AC terminals of the inverter which is connected, on its DC side, in parallel to capacitive means that are charged when current passes through the inverter, and to an energy dissipator with resistive means and an electronic regulator, wherein the function of the energy dissipator is to convert the energy generated in excess into thermal energy which dissipates into the environment.

By applying the compensation voltage, the AC current circulating through the inverter causes the absorption of an energy striking the capacitive means, raising the voltage $V_c$. This energy must be dissipated to maintain the voltage $V_C$ and protect the device, particularly the capacitive means, and the electronic regulator and resistive means are used for that function. As the voltage increases, the regulator connects more resistors, so the total ohmic value of the resistor of the resistive means decreases and the dissipated energy increases.

The electronic regulator and the resistive elements allow controlling the voltage of the DC bus, $V_C$. The inverter converts this voltage $V_C$ into an AC voltage referred to as phase- and amplitude-controlled compensation voltage $V_X$.

In a particular embodiment, the energy dissipator is used for channeling the excess energy to other elements in which it can be utilized.

The energy dissipator, the inverter, and the switching means are activated by control means which, in response to voltage and current signals in the furnace and in the voltage source, are capable of generating control signals to regulate the amplitude and phase of the compensation voltage.

Advantageously, the current regulating device can be installed in a pre-existing electric arc furnace system or in a new installation and allows preventing the problems caused by short circuits occurring in the shaft of the furnace during operation. Particularly, the invention allows controlling the currents circulating through the furnace electrodes both to prevent the short-circuit currents from damaging the electrodes and to prevent the protective elements from short circuits frequently stopping the operation of the furnace. Even more advantageously, in a particular embodiment three current regulating devices, one for each phase, are connected in series between three voltage sources and the electrodes of a three-phase furnace.

Generally, the present invention achieves more stable circulating currents that are kept centered with the furnace operation setpoint value, achieving more stable melting processes of shorter duration and improving production process efficiency.

Controlling the current also allows solving the problem of mechanically moving the electrodes in order to change the impedance of the furnace; continuously controlling the current prevents having to move the electrodes all of a sudden, so the impacts of the electrodes against the aluminum scrap will be lower, reducing the breakage of the electrodes or completely preventing damage at the ends of the electrodes.

During normal furnace operation, the switching means allow the passage of current through their branch, such that the current does not circulate through the parallel branch of the converter, so the elements of the converter hardly consume any energy or experience any degradation. This translates into a longer service life of the elements, thus resulting in a very highly reliable device.

In a particular embodiment, *the at least one inverter comprises at least one single-phase inverter bridge with semiconductor devices.*

Advantageously, an inverter bridge allows transforming a DC current into a sinusoidal current, particularly an inverter bridge formed by semiconductor devices or elements allows obtaining an efficient and compact inverter without any mechanical elements that are susceptible to failures.

In a particular embodiment, *the at least one inverter comprises a bridge with four semiconductor devices, preferably insulated-gate bipolar transistors (IGBTs) with four diodes connected in anti-parallel.*

Advantageously, an inverter formed by IGBTs allows transforming a DC voltage into a sinusoidal voltage without harmonic components which damage the voltage sources, the furnace, or the elements of the device.

In a particular embodiment, *the switching means comprise a switch configured for deactivating the device and a static bypass switch configured for instantaneously activating or deactivating on-load voltage regulation, wherein the switch and the static bypass switch are connected to one another in parallel.*

Advantageously, the switch allows activating or deactivating the current regulating device without disconnecting it physically from the installation, for example to perform maintenance tasks; the static bypass switch allows instantaneously activating or deactivating the operation of the regulating device while the furnace is in operation. During normal operation, the switch will usually be open and the static bypass switch will usually be closed.

In a particular embodiment, *the switch is one from the following list: an automatic switch, a load switch, a motor-driven no-load isolator.*

Advantageously, the switch can be operated manually by an operator or can be operated by means of an external control signal, whether on-load or under no-load.

In a particular embodiment, *the static bypass switch comprises thyristors, IGCTs, GTOs, and/or IGBTs.*

Advantageously, the static bypass switch comprises a specific type of semiconductor device depending on the desired response speed.

In a particular embodiment, the static bypass switch comprises an auxiliary switching circuit configured for cutting off the on-load current. Advantageously, the auxiliary circuit comprising thyristors, capacitors, and inductors, allows canceling the current circulating through the semiconductor devices of the static bypass switch as a result of the current generated by the discharge of the capacitors.

In a particular embodiment, *the electronic regulator comprises IGBT-type semiconductor devices.*

Advantageously, the response speed of the IGBT allows performing a very quick control which successfully maintains the DC voltage of the DC bus in response to control signals activating the electronic regulator.

In a particular embodiment, *the resistive means comprise a plurality of resistors with different electrical resistance values, the control means being configured for emitting a control signal S4 for activating or deactivating a control of the electronic regulator selectively connecting at least one resistor of the plurality of resistors.*

Advantageously, the resistive means allow regulating the amplitude of the DC bus voltage by means of changing the total resistive load connected in series with the electronic regulator.

Advantageously, the control means act on at least one phase of the device.

In a particular embodiment, *the device comprises respective secondary control means for activating or deactivating the elements of the switching means, of the converter, and/or of the energy dissipator, wherein the*

*secondary control means are configured to begin operation in response to the signals S1, S2, and/or S3 of the control means, signals S1, S2, and/or S3 emitted in turn by the control means in response to the measurement signals $S_{Vh}$, $S_{Vt}$, $S_{Vc}$, $S_i$.*

Advantageously, the control means only emit signals for activating or deactivating the controlled elements of the device, particularly the switching means, the converter, and the energy dissipator, and the secondary control means generate the signals required for controlling each of the constituent elements of the switching means, of the converter, and of the energy dissipator. In a particular embodiment, the secondary control means are capable of emitting trigger pulses to the semiconductor devices of the switching means, of the converter, and of the energy dissipator.

Advantageously, the control means receive signals, process and emit control signals for each of the phases. In a particular embodiment, the control means emit control signals for three phases simultaneously, particularly control signals for activating three phases of the switching means. In the manner, in the event that a short circuit current emerges in one phase, the device can quickly react before the short circuit spreads to the remaining phases.

In a particular embodiment, the control means are common for the three phases of the installation.

In a *second inventive aspect, the invention provides a method for continuously regulating the current in a three-phase AC powered electric arc furnace installation according to the first inventive aspect, comprising the following steps:*

- *providing a regulating device for each phase connected in series between the voltage sources and the furnace electrodes;*
- *for each phase, when the furnace is in operation, the voltage measuring means measure the voltages $V_h$, $V_t$, $V_c$ and the current measuring means measure the current $I_h$, and continuously emit measurement signals $S_{Vh}$, $S_{Vt}$, $S_{Vc}$, $S_i$ to the control means;*
- *for each phase, if the time variation of the current $I_h$ increases above a threshold value $I_{hmax}$, the control means:*

  • *emit a signal S1 to open the switching means and activate the device;*
  • *emit a control signal S3 to the energy dissipator depending on the measurement signals $S_{Vh}$, $S_{Vt}$, $S_{Vc}$, $S_i$;*
  • *for each phase, the control means emit a control signal S2 to the inverter,*

*such that for each phase, the electronic regulator of the energy dissipator controls the passage of current to the resistive means by controlling the dissipated energy and keeping a DC voltage Vc between the DC terminals of the inverter under control, converting the voltage Vc into a phase- and amplitude-regulated AC compensation voltage $V_x$, which is in turn subtracted from the voltage $V_t$ of the voltage source, such that the voltage $V_h$ applied to the furnace electrodes is reduced, and accordingly, the current $I_h$ does not exceed the threshold $I_{hmax}$.*

Advantageously, the method for continuously regulating current allows preventing short-circuit currents from going through the furnace electrodes, so triggering of the protection does not constantly stop the process of the furnace and deterioration of the electrodes caused by impacts resulting from the control performed by abruptly moving the electrodes is prevented.

Description of the Drawings

Figures 1a-1b show two embodiments of the current regulating device connected in series with the voltage generator and the furnace, for a single-phase system and for a three-phase system.

Figure 2 shows the single-phase circuit connected in series with a furnace electrode.

Figure 3 shows the converter of the device.

Figure 4 shows the device with its control circuit and its operative connections.

Figure 5 shows examples of waveforms for several relevant magnitudes.

Detailed Description of the Invention

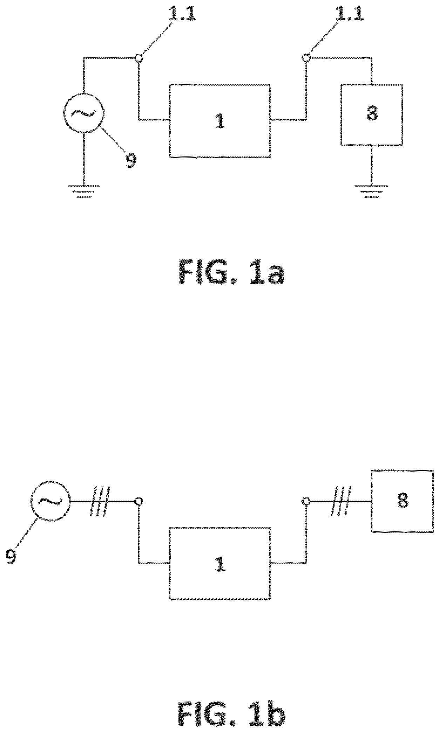

Figure 1 shows a set of three current regulating devices (1) connected in series between a three-phase source and a three-phase furnace. The three-phase source that is shown is equivalent to a set of three single-phase AC voltage sources (9); generally the three-phase source comprises a three-phase transformer, not shown in the figures, to adapt the supply voltage of the grid to the working voltage of the furnace. Additionally, the three-phase source comprises a series of protective devices, not shown in the figures, which are common in installations of this type, particularly switches configured for cutting off the current from a short-circuit current, for example, a magnetothermal switch.

In addition to other elements which allow melting the metal, such as the shaft, the three-phase furnace comprises at least three furnace electrodes (8), these electrodes are usually manufactured in graphite, and comprise a mechanical drive which allows changing the distance between the end of the electrodes (8) and the material being melted in the shaft.

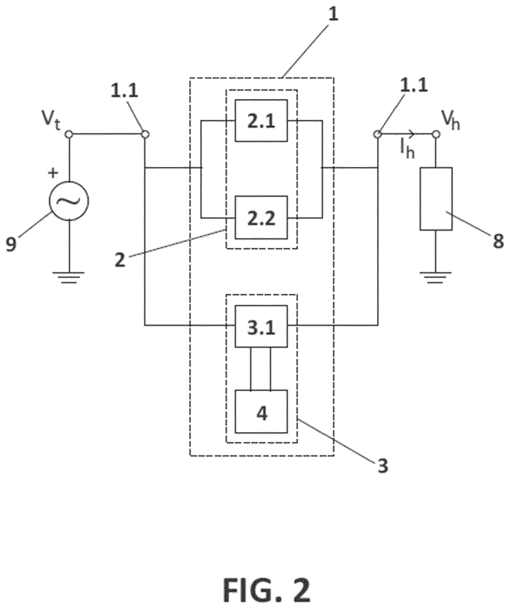

The regulating device (1) is configured for being connected in series between a voltage source (9) of a three-phase source and a furnace electrode (8) to make the assembly thereof on the installation of a pre-existing furnace easier and to facilitate both control response and current regulation. Connection in series is performed through connection terminals (1.1) of the device. The current must be regulated individually for each phase given that, generally, a short circuit will not occur simultaneously in the three furnace electrodes (8). Therefore, three devices (1) which can work independently will have to be installed in each three-phase installation, and as shown in Figure 2 each of the phases in turn comprises switching means (2) and a converter (3) which is the element performing current regulation *per se.*

The switching means (2) and the converter (3) are connected to one another in parallel for activating or deactivating each phase of the device (1) separately; i.e., the change in the state of the switching means (2) allows the selective circulation of current through the branch of the converter (3) and the start of current regulation.

The switching means (2) can have different configurations depending on the installation characteristics and needs, specifically depending on the power of the furnace installation and the response speed required. Preferably, the switching means (2) will act by activating the three phases.

In a particular embodiment, the switching means (2) comprise a switch (2.1), or a main switch, for disconnecting the device to perform maintenance operations, although not necessarily with the capacity to cut off the on-load current; in this embodiment, the switch (2.1) is an automatic switch-type element. In another embodiment, the switch (2.1) is a no-load isolator or a load switch; these elements are capable of cutting off the on-load current, but their response time makes them rather unsuitable for the type of regulation required in the present invention.

Therefore, to complement the switch (2.1), a static bypass switch (2.2) connected in parallel with the switch (2.1) is required; the static bypass switch (2.2) is configured for cutting off the current instantaneously when the start of a short circuit is detected, so it must be an element capable of working with high powers and with a quick response speed. In one embodiment, the static bypass switch (2.2) comprises a series of semiconductor devices capable of cutting off the on-load current when they receive an opening signal S1 through the processing means.

In some embodiments, the static bypass switch (2.2) is formed by thyristors, IGCTs, GTOs, IGBTs, or a combination thereof. If the chosen semiconductor devices or their configuration alone do not allow cutting off the circulating current within the time required by the application, the static bypass switch (2.2) includes an auxiliary switching circuit, or a secondary control means, formed by auxiliary inductors, capacitors, and thyristors; the previously charged capacitor discharges when the auxiliary thyristors are triggered, providing a current which cancels the current circulating through the semiconductor devices of the static bypass switch (2.2) which causes the blocking thereof at its zero-crossing.

During the normal operation of the furnace (8), the switch (2.1) is open and the static bypass switch (2.2) is closed, such that the current circulates only through the branch of the switching means (2) until the static bypass switch (2.2) receives the opening signal S1 for opening the branch or branches corresponding to the switching means (2) and causing the current to go through the branch or branches of the converter (3). The switch (2.1) is configured to operate when there is a need to deactivate the device (1), for example to perform maintenance operations in the installation.

Figure 2 shows the converter (3) connected in parallel with the switching means (2), the converter (3) formed by an inverter (3.1), and an energy dissipator (4). The function of the inverter (3.1) is to change the DC bus voltage kept constant by the energy dissipator (4) from DC to AC.

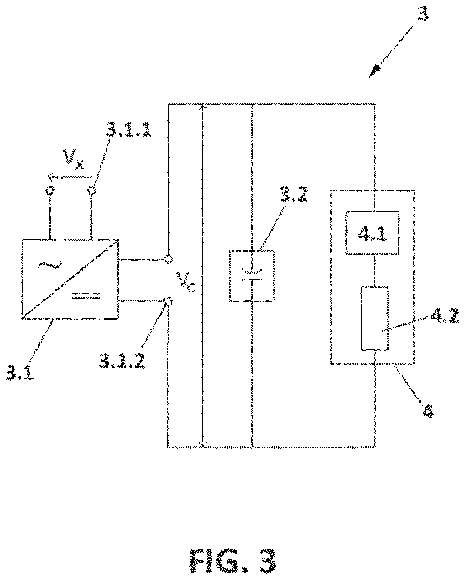

The inverter (3.1) is shown in Figure 3 as a generic inverter with AC terminals (3.1.1) and DC terminals (3.1.2), capable of transforming a DC voltage $V_C$ into an AC voltage $V_x$. The elements of the DC side, also referred to as DC bus, are connected to the DC terminals (3.1.2) and comprise capacitive means (3.2) which, in the embodiment shown, is a single capacitor, and connected in parallel to the capacitive means (3.2), a set of electronic regulator (4.1) and resistive means (4.2), connected in series with the electronic regulator (4.1).

In a preferred embodiment, the inverter (3.1) is formed by a bridge with four IGBTs. Semiconductor devices of another type can be used, but IGBTs allows a quick response and have the additional advantage of generating a sinusoidal signal that does not introduce harmonic components, which prevents the circulation of harmonic currents and the need to include expensive equipment to correct these problems. To be able to perform the inversion, the IGBTs must receive trigger pulses generated by an auxiliary control circuit which is activated in response to a control signal S2 of the control means (7).

The electronic regulator (4.1) of the embodiment shown in Figure 3 is a chopper activated by means of signal S3, and comprises several IGBTs which allow connecting one or more resistors, therefore changing the ohmic value connected to the bus and regulating the current circulating through the resistive means (4.2) and the dissipated energy.

Moreover, when current passes through the resistive means (4.2), consumption of power, which dissipates into the environment, occurs. In a preferred embodiment, the resistive means (4.2) comprise a plurality of resistors which can be connected and disconnected selectively, and with different resistor setpoint values and different wiring diagrams, for example in series or in parallel, such that the resulting value of the resistor can be modified as deemed necessary; for this purpose, the control means (7) emit a control signal or series of control signals, S4, which allow modifying the total value of the electrical resistor. As a result, the power consumed depends on the total value of the connected electrical resistor.

The DC voltage $V_C$ is converted into an AC compensation voltage $V_x$ after going through the inverter (3.1), the AC terminals (3.1.1) of which are connected in series between the voltage source (9) and the furnace electrode (8), such that the compensation voltage $V_x$ is subtracted from the voltage of the voltage source (9), $V_h$. The result is that, for a given impedance in the furnace electrode (8) $Z_h$ and a constant feed voltage $V_h$, the circulating current in the furnace electrode (8) is reduced as a result of the compensation voltage $V_x$:

$$I_h = \frac{V_t - V_x}{Z_h}$$

In that sense, although the voltage of the source (9) is kept constant and the impedance $Z_h$ of the electrode (8) is not modified by moving the electrodes (8), current $I_h$ does not increase above the maximum value allowed by the installation as a result of the start of a short circuit.

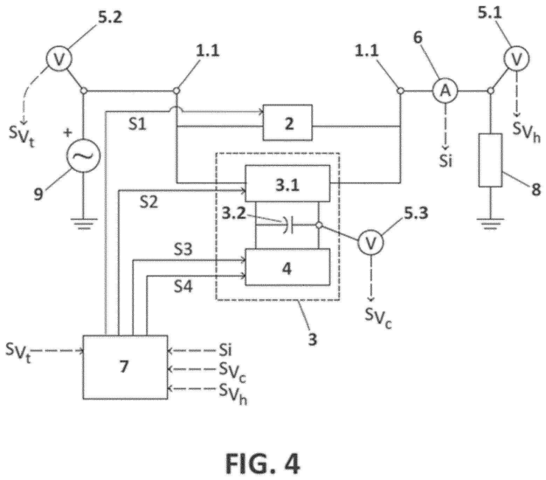

This regulation requires adapting the voltage value to the variation of the circulating current. This is achieved by means of the constant monitoring of the main variables of the installation, $V_h$, $V_t$, $V_c$ e $I_h$, corresponding to the voltage applied to the furnace electrode (8), to the voltage of the voltage source (9), the voltage of the capacitive means (3.2) and the current circulating through the furnace electrode (8); as shown in Figure 4, the monitoring is carried out by means of respective voltage measuring means (5.1, 5.2, 5.3) and current measuring means (6) continuously emitting measurement signals $S_{Vh}$, Svt, $S_{Vc}$, $S_i$ to the control means (7). Therefore, in the event of a sudden increase in current $I_h$ which anticipates a short circuit, the control means (7) start the control actions necessary to produce a compensation voltage $V_x$ according to the variation of the current $I_h$.

The control means (7) process the signals of each phase independently, but physically they can be integrated in one and the same device common to the three phases; in any case, the control signals are emitted individually for each phase. Advantageously, the control means (7) of each phase are operatively connected to one another.

In one embodiment, the control means (7) are integrated in a single physical device with a channel for each phase. In one embodiment, the device implementing the control means (7) is a computer, a PLC, a system with microprocessors, etc.

As shown in Figure 4, the control means (7) receive the measurement signals $S_{Vh}$, Svt, $S_{Vc}$, $S_i$ from the measuring means (5.1, 5.2, 5.3, 6) continuously; the control means (7) process the signals also continuously, and if the time variation of the measurement signals, particularly the current measurement signal $S_i$, anticipates

a short circuit, the control means (7), depending on the other measurement signals, determine what the compensation voltage $V_x$ should be and emit the corresponding control signals: a control signal S1 for activating the switching means (2) so that the branch of the converter (3) is activated, a control signal S2 for activating the semiconductor devices of the inverter (3.1), and a control signal to the energy dissipator (4) for activating power dissipation.

In the embodiment in which the resistive means (4.2) are a plurality of resistors which can be selectively connected, the control means (7) additionally emit a control signal or series of control signals S4 which allow varying the total value of the resistor of the resistive means (4.2).

In one embodiment, the device comprises secondary control means (not depicted); these secondary control means operate as a distributed control for the switching means (2), the converter (3), and the energy dissipator (4), to which they are operatively connected. In this embodiment, the secondary control means are activated by means of signals S1, S2, and/or S3 emitted by the control means (7), and once activated, the secondary control means emit the trigger signals to activate or deactivate each of the semiconductor devices of the switching means (2), the converter (3), and the energy dissipator (4).

Furthermore, in another embodiment, the device comprises secondary control means (not depicted) for activating or deactivating the elements of the resistive means (4.2); these secondary control means, activated by means of signal S4, operate in the same way as the secondary control means of the switching means (2), the converter (3), and the energy dissipator (4).

*Operation of the continuous current regulating device*

At the start of the process and during normal operation, the switch (2.1) is open and the static bypass switch (2.2) is closed, allowing the passage of current from the voltage source (9) to the furnace (8)

Upon detection of a time variation of the current $I_h$ which exceeds a current threshold $I_{hmax}$ that allows anticipating a short-circuit current, and before the current reaches the value which would correspond to a short circuit, the control means (7) emit a control signal S1 to the switching means (2) to activate the device (1), and accordingly, the static bypass switch (2.2) opens.

At the same time the converter (3) starts up and generates, through the inverter (3.1), the compensation voltage $V_x$, calculated from the values of the voltage $V_h$, voltage $V_t$, voltage $V_c$, and current $I_h$. When the compensation voltage $V_x$ is generated, the AC current circulating through the inverter causes the absorption of energy from the AC current side to the DC current side of the inverter (3.1) and the capacitive means (3.2) absorb energy and are charged, raising the voltage $V_C$ between the terminals of the capacitive means (3.2). This energy must be dissipated to maintain the voltage $V_C$ and protect the device, and the electronic regulator (4.1) and the resistive means (4.2) are used for that purpose. As the voltage increase, the electronic regulator (4.1) connects more resistors of the resistive means (4.2), so the total ohmic value of the resistor of the resistive means (4.2) decreases and the power absorbed and the energy dissipated increases.

The voltage $V_h$, resulting from subtracting $V_x$ from the voltage of the voltage source $V_t$, is applied to the furnace (8), and will be such that the current resulting from the quotient between said voltage $V_h$ and the impedance of the furnace is kept below the threshold value $I_{hmax}$.

Once the short circuit ceases, or when the current $I_h$ drops below the threshold value $I_{hmax}$, the voltage $V_x$ is canceled and the static bypass switch (2.2) closes, returning to the initial state.

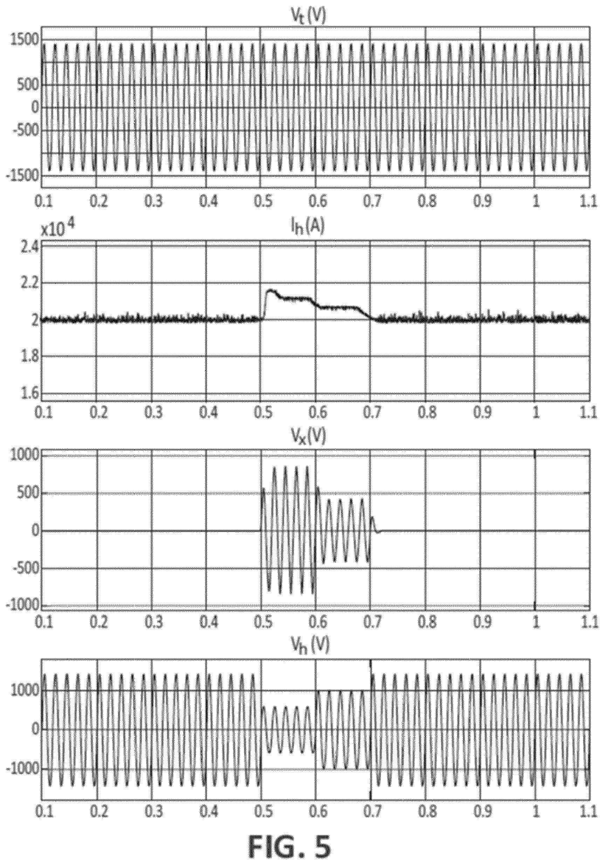

Figure 5 shows an example of the time evolution of four relevant magnitudes of the device for one and the same period of time: $V_t$, $I_h$, $V_x$, $V_h$. The relationship between voltages and currents which has been described above can be verified from this graph.

The first graph shows the signal of the supply voltage or of the voltage source (9), $V_t$, which is a sinusoidal voltage with a constant amplitude and phase.

The second graph shows the signal of the current $I_h$ circulating through the furnace (8); the occurrence of a current peak at a particular point in time, which may anticipate a short circuit, can be seen in this graph.

The third graph shows the signal of the compensation voltage $V_x$ which is generated in the device (1) in response to the current peak; the graph shows how the amplitude thereof increases practically in the moment in which the current peak of $I_h$ starts and how the amplitude thereof changes until it is again canceled.

Lastly, the fourth graph shows the signal of the voltage $V_h$ applied to the furnace (8) resulting from the combination of the signal of $V_t$ and the signal of $V_x$. There can be seen in the central area of the graph, i.e., when the current peak which may anticipate a short circuit is produced, the result of subtracting the compensation voltage $V_x$ from the supply voltage or the voltage source (9), $V_t$, such that the voltage $V_h$ reaching the furnace (the electrodes) is lower, and accordingly also the current $I_h$ circulating through said electrodes (8) of the furnace which does not exceed the threshold $I_{hmax}$.

## Claims

1. A three-phase AC powered electric arc furnace installation comprising a continuous current regulating device (1),

   wherein for each phase

   the electric arc furnace comprises at least one furnace electrode (8) to which a voltage $V_h$ is applied and through which a current $I_h$ circulates, and
the electric arc furnace is connected to a voltage source (9) generating a voltage $V_t$,

**characterized in that** the device (1) is connected in series between the voltage source (9) and a furnace electrode (8), and comprises:

- switching means (2) connected in series between the voltage source (9) and the at least one furnace electrode (8), and wherein the switching means (2) are configured for activating or deactivating the phase of the regulating device (1) to which it is connected;
- a converter (3) connected in parallel to the switching means (2), such that the current circulates through the converter (3) when the switching means (2) are open, and wherein the converter (3) comprises

  at least one inverter (3.1), with its AC terminals (3.1.1) connected in series between the voltage source (9) and the at least one furnace electrode (8), wherein the at least one inverter (3.1) is configured for converting DC voltage into AC voltage,
  capacitive means (3.2) connected to the DC terminals (3.1.2) of the at least one inverter (3.1), between which a voltage $V_c$ is maintained, and
  an energy dissipator (4) connected in parallel to the capacitive means (3.2), wherein the energy dissipator (4) comprises an electronic regulator (4.1) and resistive means (4.2) connected in series with the electronic regulator (4.1);

- voltage measuring means (5.1) for measuring the voltage $V_h$, voltage measuring means (5.2) for measuring the voltage $V_t$, voltage measuring means (5.3) for measuring the voltage $V_c$, and current measuring means (6) for measuring the current $I_h$, where the measuring means (5.1, 5.2, 5.3, 6) are configured for emitting measurement signals $S_{Vh}$, Svt, $S_{Vc}$, $S_i$ corresponding to the measured voltage and current values;
- at least several control means (7) configured for receiving and processing the measurement signals $S_{Vh}$, Svt, $S_{Vc}$, $S_i$ of the measuring means (5.1, 5.2, 5.3, 6), and for emitting control signals to the converter (3) and to the switching means (2) in response to a time variation of the current $I_h$ which

exceeds a current threshold $I_{hmax}$ as a result of the start of a short circuit induced by the electric arc, wherein the control means (7) emit

a control signal S1 to the switching means (2) to activate the device (1),
a control signal S2 to activate the inverter (3.1), and
a control signal S3 to activate the energy dissipator (4),

such that the electronic regulator (4.1) of the energy dissipator (4) regulates the passage of current to the resistive means (4.2) by controlling the dissipated energy and keeping the DC voltage $V_C$ between the DC terminals (3.1.2) of the inverter (3.1) under control, converting the voltage $V_C$ into a phase- and amplitude-regulated compensation AC voltage $V_x$, which is in turn subtracted from the voltage $V_t$ of the voltage source (9), such that the voltage $V_h$ applied to the furnace electrodes (8) is reduced, and accordingly the current $I_h$ does not exceed the threshold $I_{hmax}$.

2. The three-phase AC powered electric arc furnace installation according to the preceding claim, **characterized in that** the at least one inverter (3.1) comprises at least one single-phase inverter bridge with semiconductor devices.

3. The three-phase AC powered electric arc furnace installation according to the preceding claim, **characterized in that** the at least one inverter (3.1) comprises a bridge with four semiconductor devices, preferably insulated-gate bipolar transistors (IGBTs) with four diodes connected in anti-parallel.

4. The three-phase AC powered electric arc furnace installation according to any of the preceding claims, **characterized in that** the switching means (2) comprise a switch (2.1) configured for deactivating the device (1) and a static bypass switch (2.2) configured for instantaneously activating or deactivating on-load voltage regulation, wherein the switch (2.1) and the static bypass switch (2.2) are connected to one another in parallel.

5. The three-phase AC powered electric arc furnace installation according to the preceding claim, **characterized in that** the switch (2.1) is one of the following list: an automatic switch, a load switch, a motor-driven no-load isolator.

6. The three-phase AC powered electric arc furnace installation according to any of claims 4 or 5, **characterized in that** the static bypass switch (2.2) comprises thyristors, IGCTs, GTOs and/or IGBTs.

7. The three-phase AC powered electric arc furnace installation according to any of the preceding claims, **characterized in that** the electronic regulator (4.1) comprises IGBT-type semiconductor devices.

8. The three-phase AC powered electric arc furnace installation according to any of the preceding claims, **characterized in that** the resistive means (4.2) comprise a plurality of resistors with different electrical resistance values, the control means (7) being configured for emitting a control signal S4 for activating or deactivating a control of the electronic regulator (4.1) selectively connecting at least one resistor of the plurality of resistors.

9. The three-phase AC powered electric arc furnace installation according to any of the preceding claims, **characterized in that** it comprises respective secondary control means for activating or deactivating the elements of the switching means (2), of the converter (3), and/or of the energy dissipator (4), wherein the secondary control means are configured to begin operation in response to the signals S1, S2, and/or S3 of the control means (7), signals S1, S2, and/or S3 emitted in turn by the control means (7) in response to the measurement signals $S_{Vh}$, Svt, Svc, $S_i$.

10. A method for continuously regulating the current in a three-phase AC powered electric arc furnace installation according to any of preceding claims 1 to 9, comprising the following steps:

- providing a regulating device (1) for each phase connected in series between the voltage sources (9) and the furnace electrodes (8);
- for each phase, when the furnace is in operation, the voltage measuring means (5.1, 5.2, 5.3) measure the voltages $V_h$, $V_t$, $V_c$ and the current measuring means (6) measure the current $I_h$, and they continuously emit measurement signals $S_{Vh}$, Svt, $S_{Vc}$, $S_i$ to the control means (7);
- for each phase, if the time variation of the current $I_h$ increases above a threshold value $I_{hmax}$, the control means (7):

• emit a signal S1 to open the switching means (2) and activate the device (1);
• emit a control signal S3 to the energy dissipator (4) depending on the measurement signals $S_{Vh}$, Svt, $S_{Vc}$, $S_i$;
• for each phase, the control means (7) emit a control signal S2 to the inverter (3.1),

such that for each phase, the electronic regulator (4.1) of the energy dissipator (4) controls the passage of current to the resistive means (4.2) by controlling the dissipated energy and keeping a DC voltage $V_C$ between the DC terminals (3.1.2) of the inverter (3.1) under control, converting the voltage $V_C$ into a phase- and amplitude-regulated compensation AC voltage $V_x$, which is in turn subtracted from the voltage $V_t$ of the voltage source (9), such that the voltage $V_h$ applied to the furnace electrodes (8) is reduced, and accordingly, the current $I_h$ does not exceed the threshold $I_{hmax}$.

**Patentansprüche**

1. Dreiphasige AC-betriebene Elektrolichtbogenofenanlage, die eine Dauerstromregulierungsvorrichtung (1) aufweist,

wobei für jede Phase

der Elektrolichtbogenofen mindestens eine Ofenelektrode (8) aufweist, an die eine Spannung $V_h$ angelegt wird und durch die ein Strom $I_h$ fließt, und der Elektrolichtbogenofen mit einer Spannungsquelle (9) verbunden ist, die eine Spannung $V_t$ erzeugt,

**dadurch gekennzeichnet, dass** die Vorrichtung (1) zwischen die Spannungsquelle (9) und eine Ofenelektrode (8) in Reihe geschaltet ist, und aufweist:

- eine Schalteinrichtung (2), die zwischen die Spannungsquelle (9) und die mindestens eine Ofenelektrode (8) in Reihe geschaltet ist, und wobei die Schalteinrichtung (2) dazu ausgelegt ist, die Phase der Regulierungsvorrichtung (1), mit der sie verbunden ist, zu aktivieren oder zu deaktivieren;
- einen Wandler (3), der derart parallel zu der Schalteinrichtung (2) geschaltet ist, dass der Strom durch den Wandler (3) fließt, wenn die Schalteinrichtung (2) offen ist, und wobei der Wandler (3) aufweist:

mindestens einen Wechselrichter (3.1), dessen AC-Anschlüsse (3.1.1) in Reihe zwischen die Spannungsquelle (9) und die mindestens eine Ofenelektrode (8) geschaltet sind, wobei der mindestens eine Wechselrichter (3.1) zum Umwandeln von DC-Spannung in AC-Spannung ausgelegt ist, eine kapazitive Einrichtung (3.2), die mit den DC-Anschlüssen (3.1.2) des mindestens einen Wechselrichters (3.1) verbunden ist, zwischen denen eine Spannung $V_c$ aufrechterhalten wird, und einen Energieableiter (4), der parallel zu der kapazitiven Einrichtung (3.2) geschaltet ist, wobei der Energieableiter (4) einen elektronischen Regulierer (4.1) und eine mit dem elektronischen Regulierer (4.1) in Reihe geschaltete Widerstandseinrichtung (4.2) aufweist;

- eine Spannungsmesseinrichtung (5.1) zum Messen der Spannung $V_h$, eine Spannungsmesseinrichtung (5.2) zum Messen der Spannung $V_t$, eine Spannungsmesseinrichtung (5.3) zum Messen der Spannung $V_c$, und eine Strommesseinrichtung (6) zum Messen des Stroms $I_h$, wobei die Messeinrichtungen (5.1, 5.2, 5.3, 6) dazu ausgelegt sind, den gemessenen Spannungs- und Stromwerten entsprechende Messsignale $S_{Vh}$, Svt, $S_{Vc}$, $S_i$ auszugeben;
- mindestens mehrere Steuereinrichtungen (7), die dazu ausgelegt sind, die Messsignale $S_{Vh}$, Svt, $S_{Vc}$, $S_i$ der Messeinrichtungen (5.1, 5.2, 5.3, 6) zu empfangen und zu verarbeiten und Steuersignale an den Wandler (3) und an die Schalteinrichtung (2) in Reaktion auf eine zeitliche Änderung des Stroms In auszugeben, der infolge des Beginns eines durch den Elektrolichtbogen induzierten Kurzschlusses einen Stromschwellenwert $I_{hmax}$ überschreitet, wobei die Steuereinrichtung (7) ausgibt:

ein Steuersignal S1 an die Schalteinrichtung (2) zum Aktivieren der Vorrichtung (1), ein Steuersignal S2 zum Aktivieren des Wechselrichters (3.1), und ein Steuersignal S3 zum Aktivieren des Energieableiters (4),

derart, dass der elektronische Regulierer (4.1) des Energieableiters (4) den Stromdurchgang zu der Widerstandseinrichtung (4.2) durch Steuern der abgeleiteten Energie und Kontrollieren der DC-Spannung $V_c$ zwischen den Gleichstromanschlüssen (3.1.2) des Wechselrichters (3.1) reguliert und die Spannung $V_c$ in eine phasen- und amplitudenregulierte Kompensations-AC-Spannung $V_x$ umwandelt, die ihrerseits von der Spannung $V_t$ der Spannungsquelle (9) subtrahiert wird, sodass die an die Ofenelektroden (8) angelegte Spannung reduziert wird und dementsprechend der Strom In den Schwellenwert $I_{hmax}$ nicht überschreitet.

2. Dreiphasige AC-betriebene Elektrolichtbogenofenanlage nach dem vorhergehenden Anspruch, **dadurch gekennzeichnet, dass** der mindestens eine Wechselrichter (3.1) mindestens eine einphasige Wechselrichterbrücke mit Halbleitervorrichtungen aufweist.

3. Dreiphasige AC-betriebene Elektrolichtbogenofenanlage nach dem vorhergehenden Anspruch, **dadurch gekennzeichnet, dass** der mindestens eine Wechselrichter (3.1) eine Brücke mit vier Halbleitervorrichtungen, vorzugsweise Bipolartransistoren mit isolierter Gate-Elektrode (IGBT), mit vier antiparallel geschalteten Dioden aufweist.

4. Dreiphasige AC-betriebene Elektrolichtbogenofenanlage nach einem der vorhergehenden Ansprüche, **dadurch gekennzeichnet, dass** die Schalteinrichtung (2) einen Schalter (2.1), der dazu ausgelegt ist, die Vorrichtung (1) zu deaktivieren, und einen statischen Bypass-Schalter (2.2), der dazu ausgelegt ist, die Spannungsregulierung unter Last unmittelbar zu aktivieren oder zu deaktivieren, aufweist, wobei der Schalter (2.1) und der statische Bypass-Schalter (2.2) parallel zueinander geschaltet sind.

5. Dreiphasige AC-betriebene Elektrolichtbogenofenanlage nach dem vorhergehenden Anspruch, **dadurch gekennzeichnet, dass** der Schalter (2.1) einer ist von: einem automatischen Schalter, einem Lastschalter, einem motorgetriebenen Nulllasttrennschalter.

6. Dreiphasige AC-betriebene Elektrolichtbogenofenanlage nach einem der Ansprüche 4 oder 5, **dadurch gekennzeichnet, dass** der statische Bypass-Schalter (2.2) Thyristoren, IGCT, GTO und/oder IGBT aufweist.

7. Dreiphasige AC-betriebene Elektrolichtbogenofenanlage nach einem der vorhergehenden Ansprüche, **dadurch gekennzeichnet, dass** der elektronische Regulierer (4.1) Halbleitervorrichtungen vom IGBT-Typ aufweist.

8. Dreiphasige AC-betriebene Elektrolichtbogenofenanlage nach einem der vorhergehenden Ansprüche, **dadurch gekennzeichnet, dass** die Widerstandseinrichtung (4.2) eine Mehrzahl von Widerständen mit unterschiedlichen elektrischen Widerstandswerten aufweist, wobei die Steuereinrichtung (7) dazu ausgelegt ist, ein Steuersignal S4 zum Aktivieren oder Deaktivieren einer Steuerung des elektronischen Regulierers (4.1) abzugeben, der selektiv mindestens einen Widerstand der Mehrzahl von Widerständen verbindet.

9. Dreiphasige AC-betriebene Elektrolichtbogenofenanlage nach einem der vorhergehenden Ansprüche, **dadurch gekennzeichnet, dass** sie entsprechende sekundäre Steuereinrichtungen zum Aktivieren oder Deaktivieren der Elemente der Schalteinrichtung (2), des Wandlers (3) und/oder des Energieableiters (4) aufweist, wobei die sekundären Steuereinrichtungen dazu ausgelegt sind, den Betrieb in Reaktion auf die Signale S1, S2 und/oder S3 der Steuereinrichtung (7) zu beginnen, wobei die Signale S1, S2 und/oder S3 wiederum von der Steuereinrichtung (7) in Reaktion auf die Messsignale $S_{Vh}$, Svt, $S_{Vc}$, $S_i$ ausgegeben werden.

10. Verfahren zur kontinuierlichen Regulierung des Stroms in einer dreiphasigen AC-betriebenen Elektrolichtbogenofenanlage nach einem der vorhergehenden Ansprüche 1 bis 9, das die folgenden Schritte aufweist:

   - Bereitstellen einer Regulierungsvorrichtung (1) für jede Phase, die in Reihe zwischen die Spannungsquellen (9) und die Ofenelektroden (8) geschaltet ist;
   - für jede Phase, wenn der Ofen in Betrieb ist, Messen der Spannungen $V_h$, $V_t$, $V_c$ durch die Spannungsmesseinrichtung (5.1, 5.2, 5.3) und Messen des Stroms $I_h$ durch die Strommesseinrichtung (6) und kontinuierliches Ausgeben von Messsignalen $S_{Vh}$, Svt, $S_{Vc}$, $S_i$ an die Steuereinrichtung (7) durch diese;
   - für jede Phase, wenn die zeitliche Änderung des Stroms In über einen Schwellenwert $I_{hmax}$ hinaus zunimmt, mittels der Steuereinrichtung (7):

      - Ausgeben eines Signals S1, um die Schalteinrichtung (2) zu öffnen und die Vorrichtung (1) zu aktivieren;
      - Ausgeben eines Steuersignal S3 an den Energieableiter (4) in Abhängigkeit von den Messsignalen $S_{Vh}$, Svt, $S_{Vc}$, $S_i$;
      - für jede Phase, Ausgeben eines Steuersignals S2 an den Wechselrichter (3.1) durch die Steuereinrichtung (7),

derart, dass für jede Phase der elektronische Regulierer (4.1) des Energieableiters (4) den Stromdurchgang zu der Widerstandseinrichtung (4.2) durch Steuern der abgeleiteten Energie und Kontrollieren der DC-Spannung $V_c$ zwischen den Gleichstromanschlüssen (3.1.2) des Wechselrichters (3.1) steuert und die Spannung $V_c$ in eine phasen- und amplitudenregulierte Kompensations-AC-Spannung $V_x$ umwandelt, die ihrerseits von der Spannung $V_t$ der Spannungsquelle (9) subtrahiert wird, sodass die an die Ofenelektroden (8) angelegte Spannung $V_h$ reduziert wird und dementsprechend der Strom In den Schwellenwert $I_{hmax}$ nicht überschreitet.

## Revendications

1. Une installation de four à arc électrique alimenté en courant alternatif triphasé, comprenant un dispositif (1) de régulation de courant continu,

   dans laquelle, pour chaque phase

   le four à arc électrique comprend au moins une électrode de four (8) à laquelle est appliquée une tension $V_h$ et à travers laquelle circule un courant $I_h$, et
   le four à arc électrique est connecté à une source de tension (9) générant une tension $V_t$,

   **caractérisé en ce que** le dispositif (1) est connecté en série entre la source de tension (9) et une électrode de four (8), et comprend :

   - des moyens de commutation (2) connectés en série entre la source de tension (9) et ladite au moins une électrode de four (8), les moyens de commutation (2) étant configurés pour activer ou désactiver la phase du dispositif de régulation (1) auquel ils sont connectés ;
   - un convertisseur (3) connecté en parallèle aux moyens de commutation (2), de telle sorte que le courant circule à travers le convertisseur (3) lorsque les moyens de commutation (2) sont ouverts, le convertisseur (3) comprenant

   au moins un onduleur (3.1), avec ses bornes CA (3.1.1) connectées en série entre la source de tension (9) et la ou les électrodes de four (8), ledit au moins un onduleur (3.1) étant configuré pour convertir la tension continue DC en tension alternative AC,
   des moyens capacitifs (3.2) connectés aux bornes DC (3.1.2) dudit au moins un onduleur (3.1), entre lesquels une tension $V_c$ est maintenue, et
   un dissipateur d'énergie (4) connecté en parallèle aux moyens capacitifs (3.2), le dissipateur d'énergie (4) comprenant un régulateur électronique (4.1) et des moyens résistifs (4.2) connectés en série au régulateur électronique (4.1) ;

   - des moyens (5.1) de mesure de tension pour mesurer la tension $V_h$, des moyens (5.2) de mesure de tension pour mesurer la tension $V_t$, des moyens (5.3) de mesure de tension pour mesurer la tension $V_c$, et des moyens (6) de mesure de courant pour mesurer l'intensité $I_h$, les moyens de mesure (5.1, 5.2, 5.3, 6) étant configurés pour émettre des signaux de mesure $S_{Vh}$, Svt, $S_{Vc}$, $S_i$ correspondant aux valeurs de tension et d'intensité mesurées ;
   - au moins plusieurs moyens de commande (7) configurés pour recevoir et traiter les signaux de mesure $S_{Vh}$, Svt, $S_{Vc}$, $S_i$ des moyens de mesure (5.1, 5.2, 5.3, 6), et pour émettre des signaux de commande vers le convertisseur (3) et vers les moyens de commutation (2) en réponse à une variation temporelle de l'intensité $I_h$ qui dépasse un seuil d'intensité $I_{hmax}$ suite au début d'un court-circuit induit par l'arc électrique, les moyens de commande (7) émettant

   un signal de commande S1 vers les moyens de commutation (2) pour activer le dispositif (1),
   un signal de commande S2 pour activer l'onduleur (3.1), et
   un signal de commande S3 pour activer le dissipateur d'énergie (4),

   de telle sorte que le régulateur électronique (4.1) du dissipateur d'énergie (4) régule le passage du courant vers les moyens résistifs (4.2) en commandant l'énergie dissipée et en maintenant la tension continue $V_c$ entre les bornes DC (3.1.2) de l'onduleur (3.1) sous commande, en convertissant la tension $V_c$ en une tension alternative de compensation régulée en phase et en amplitude $V_x$, qui est à son tour soustraite de la tension $V_t$ de la source de tension (9), de telle sorte que la tension $V_h$ appliquée aux électrodes du four (8) est réduite, et par conséquent l'intensité $I_h$ ne dépasse pas le seuil $I_{hmax}$.

2. L'installation de four à arc électrique alimenté en courant alternatif triphasé selon la revendication précédente, **caractérisée en ce que** ledit au moins un onduleur (3.1) comprend au moins un pont onduleur monophasé avec des dispositifs semi-conducteurs.

3. L'installation de four à arc électrique alimenté en courant alternatif triphasé selon la revendication précédente, **caractérisée en ce que** ledit au moins un onduleur (3.1) comprend un pont avec quatre dispositifs semi-conducteurs, de préférence des transistors bipolaires à grille isolée (IGBT) avec quatre diodes connectées en anti-parallèle.

4. L'installation de four à arc électrique alimenté en courant alternatif triphasé selon l'une quelconque des revendications précédentes, **caractérisée en ce que** les moyens de commutation (2) comprennent un commutateur (2.1) configuré pour désactiver le dispositif (1) et un commutateur de dérivation statique (2.2) configuré pour activer ou désactiver instantanément la régulation de tension en charge, le commutateur (2.1) et le commutateur de dérivation statique (2.2) étant connectés l'un à l'autre en parallèle.

5. L'installation de four à arc électrique alimenté en courant alternatif triphasé selon la revendication précédente, **caractérisée en ce que** le commutateur (2.1) est un parmi la liste suivante : un commutateur automatique, un commutateur de charge, un isolateur à vide motorisé.

6. L'installation de four à arc électrique alimenté en courant alternatif triphasé selon l'une quelconque des revendications 4 ou 5, **caractérisée en ce que** le commutateur de dérivation statique (2.2) comprend des thyristors, des IGCT, des GTO et/ou des IGBT.

7. L'installation de four à arc électrique alimenté en courant alternatif triphasé selon l'une quelconque des revendications précédentes, **caractérisée en ce que** le régulateur électronique (4.1) comprend des dispositifs semi-conducteurs de type IGBT.

8. L'installation de four à arc électrique alimenté en courant alternatif triphasé selon l'une quelconque des revendications précédentes, **caractérisée en ce que** les moyens résistifs (4.2) comprennent une pluralité de résistances de valeurs de résistance électrique différentes, les moyens de commande (7) étant configurés pour émettre un signal de commande S4 pour activer ou désactiver une commande du régulateur électronique (4.1) connectant sélectivement au moins une résistance de la pluralité de résistances.

9. L'installation de four à arc électrique alimenté en courant alternatif triphasé selon l'une quelconque des revendications précédentes, **caractérisée en ce qu'**elle comprend des moyens de commande secondaires respectifs pour activer ou désactiver les éléments des moyens de commutation (2), du convertisseur (3), et/ou du dissipateur d'énergie (4), les moyens de commande secondaires étant configurés pour commencer à fonctionner en réponse aux signaux S1, S2 et/ou S3 des moyens de commande (7), aux signaux S1, S2 et/ou S3 émis à son tour par les moyens de commande (7) en réponse aux signaux de mesure $S_{Vh}$, Svt, $S_{Vc}$, $S_i$.

10. Un procédé de régulation continue du courant dans une installation de four à arc électrique alimenté en courant alternatif triphasé selon l'une quelconque des revendications précédentes 1 à 9, comprenant les étapes suivantes :

- le fait de prévoir un dispositif de régulation (1) pour chaque phase connectée en série entre les sources de tension (9) et les électrodes du four (8) ;
- pour chaque phase, lorsque le four est en fonctionnement, les moyens de mesure de tension (5.1, 5.2, 5.3) mesurent les tensions $V_h$, $V_t$, $V_c$ et les moyens de mesure de courant (6) mesurent l'intensité $I_h$, et ils émettent en permanence des signaux de mesure $S_{Vh}$, Svt, $S_{Vc}$, $S_i$ vers les moyens de commande (7) ;
- pour chaque phase, si la variation temporelle de l'intensité $I_h$ augmente au-dessus d'une valeur seuil $I_{hmax}$, les moyens de commande (7) :

• émettent un signal S1 pour ouvrir les moyens de commutation (2) et activer le dispositif (1) ;
• émettent un signal de commande S3 vers le dissipateur d'énergie (4) en fonction des signaux de mesure $S_{Vh}$, Svt, $S_{Vc}$, $S_i$ ;
• pour chaque phase, les moyens de commande (7) émettent un signal de commande S2 à destination de l'onduleur (3.1),

de telle sorte que pour chaque phase, le régulateur électronique (4.1) du dissipateur d'énergie (4) commande le passage du courant vers les moyens résistifs (4.2) en commandant l'énergie dissipée et en maintenant une tension continue $V_c$ entre les bornes continues (3.1.2) de l'onduleur (3.1) sous commande, convertissant la tension $V_c$ en une tension alternative de compensation régulée en phase et en amplitude $V_x$, qui est à son tour soustraite de la tension $V_t$ de la source de tension (9), de telle sorte que la tension $V_h$ appliquée aux électrodes du four (8) est réduite, et qu'en conséquence, l'intensité $I_h$ ne dépasse pas le seuil $I_{hmax}$.

FIG. 1a

FIG. 1b

**FIG. 2**

FIG. 3

FIG. 4

**FIG. 5**

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3124903 A1